# EUROPEAN PATENT APPLICATION

(11) **EP 4 711 348 A1**
(43) Date of publication of application: **18.03.2026**
(21) Application number: 25382964.2
(22) Date of filing: 12.09.2025
(51) Int. Cl.: C04B 26/12, C08L 97/00, C09J 161/06, C04B 111/28

(54) **METHOD FOR MANUFACTURING FLAME-RETARDANT, RENEWABLE AND RECYCLABLE BUILDING MATERIALS FROM LIGNOCELLULOSIC BIOMASS**

(30) Priority: 13.09.2024 ES 202430723
(71) Applicant: Ingelia, S.L., 46010 Valencia (ES); Universitat Politècnica de València, 46022 Valencia (ES); CONSEJO SUPERIOR DE INVESTIGACIONES CIENTIFICAS (CSIC), 28006 Madrid (ES); Instituto Tecnológico Metalmecánico, Mueble Madera, Embalaje y Afines - AIDIMME, 46980 Paterna (ES)
(72) Inventor: RENZ, MICHAEL, VALENCIA (ES); MARCO ALEIXANDRE, ALICIA, VALENCIA (ES); PÉREZ CAMPOS, ROSA MARÍA, VALENCIA (ES); OLIVER TOMÁS, BORJA, VALENCIA (ES)
(74) Representative: Isern Patentes y Marcas S.L.

(57) **Abstract**

The present invention relates to the production of recyclable building materials from renewable sources. In particular, a method is described for preparing building materials from carbonaceous solids with an oxygen to carbon molar ratio of less than 0.2 and adhesive. Likewise, flame-retardant, recyclable and reusable building materials manufactured according to the described method are described.

## Description

### TECHNICAL FIELD OF THE INVENTION

The present invention relates to the production of building materials and, more specifically, to the field of production of recyclable building materials from renewable sources.

### STATE OF THE ART

In the context of a growing demand for sustainable and environmentally friendly solutions, the construction industry faces the challenge of developing materials that not only offer high performance, but also reduce environmental impact throughout their life cycle.

At present, the manufacture of building materials has evolved considerably, with an increasing focus on sustainability and carbon footprint reduction. Traditional boards, commonly made from wood or other synthetic materials, have significant limitations, especially in terms of recyclability and fire performance. These materials often rely on adhesives and synthetic resins that are not only difficult to recycle, but may also release harmful volatile compounds during their lifetime or in the event of fire.

Lignocellulosic biomass, composed mainly of cellulose, hemicellulose and lignin, is a renewable and abundant source of raw materials. However, its transformation into durable, resistant and flame-retardant building materials has required significant progress in processing methods. In the field of flame-retardant materials, conventional solutions usually involve the addition of halogen- or phosphorus-based flame retardants, which can have adverse environmental impacts and complicate the recycling of the material. Recent advances have attempted to address these problems by developing lignocellulosic materials treated or combined with more environmentally friendly additives, but there are still significant opportunities to improve the structural, aesthetic and fire safety properties of these materials.

Spanish patent with publication number ES 2638039 B2 describes a method for obtaining a biopolymer wherein a hydrochar mixture, obtained from lignocellulosic biomass, phenolic compounds and aldehydes, is treated at a temperature between 100 and 250°C. However, the main drawback of this method is that to achieve acceptable mechanical strength a high percentage of adhesive, which must contain at least 25% phenolic compounds, such as phenol, must be incorporated. Furthermore, the hydrochar used in the process has an oxygen/carbon molar ratio of 0.3 or higher. This results in insufficient strength of the resulting material, especially when considering its use in the manufacture of building materials, such as large boards. Likewise, no mention is made of the flame-retardant properties of the resulting material, which is an additional limitation.

Therefore, in accordance with the foregoing, the need to develop a method for manufacturing flame-retardant, renewable and recyclable building materials is evident, using a renewable carbonaceous material that, in turn, can be obtained from waste lignocellulosic biomass and reintegrated into the circular economy. The present invention addresses these challenges by means of a method that not only optimises the use of lignocellulosic biomass, but also ensures that the resulting materials meet demanding structural performance, fire safety and sustainability standards.

### DESCRIPTION

To provide a response to the shortcomings identified, the present invention provides a method for manufacturing flame-retardant, renewable and recyclable building materials, as defined in claim 1. The process developed allows the production of boards that combine flame-retardant properties with the ability to be recycled at the end of their useful life, thus promoting a circular economy approach in the construction industry. Furthermore, the use of biomass in this method contributes to the reduction of waste and the exploitation of natural resources, aligning with current trends in climate change mitigation and ecosystem conservation.

The present invention describes, for the first time, the conversion of hydrochar into building materials, such as, for example, boards. There are two key conditions to achieve building materials with adequate and sufficient strength for use: a low O/C molar ratio and the application of pressure during hardening of the board. These two factors transform a phenolic resin into a board. The building materials obtained by the method of the invention can be recycled, meaning that they result in materials that fit perfectly into the circular economy, in line with the policies of the European Commission's Green Deal, which aims to put the EU on the path towards a green transition, with the ultimate goal of achieving climate neutrality by 2050.

Another prominent feature of the present invention, compared to known methods, is the notable flame-retardant property of the resulting building materials, which makes them potentially resistant to adverse outdoor conditions. Materials made from carbonaceous compounds are often highly combustible. However, surprisingly, the building materials obtained by the methods described in the present invention exhibit excellent fire performance, with low heat release and smoke generation rates.

In its first aspect, the invention relates to a method for obtaining flame-retardant, renewable and recyclable building materials with a renewable content of at least 85%, characterised in that it comprises:
(a) providing a carbonaceous solid with an O/C molar ratio of less than 0.2;
(b) adding to the solid a total amount of adhesive between 1% and 20% by weight of the total dry weight of the carbonaceous solid;
(c) homogenising the mixture resulting from the previous step;
(d) pouring the mixture produced in the previous step into a mould; and
(e) applying a temperature between 100 and 180°C and a pressure of at least 5 MPa to the mould.

In its second aspect, the invention relates to flame-retardant, renewable and recyclable building materials manufactured by the method of the second aspect, in particular it relates to building boards.

In its third aspect, the invention relates to flame-retardant, renewable and recyclable building materials comprising a carbonaceous solid with an O/C molar ratio of less than 0.2 and an adhesive.

### BRIEF DESCRIPTION OF THE FIGURES

- Fig. 1 shows an embodiment of the building material, in this case a 50 mm x 47 mm board, prepared according to the method of the invention.
- Fig. 2 shows building material mounted on the support for the fire performance test according to example 10. Building material before the test (A) and after the test (B).
- Fig. 3 shows the heat release rate versus time in the fire performance test of the boards described in example 10.
- Fig. 4 shows the smoke release rate versus time in the fire performance test of the boards described in example 10.

### DETAILED DESCRIPTION OF AN EXEMPLARY EMBODIMENT

In the following detailed description, numerous specific details are set forth in the form of examples to provide a thorough understanding of the relevant teachings. However, it will be apparent to those skilled in the art that the present teachings can be put into practice without such details.

The first aspect of the invention relates to a method for obtaining flame-retardant, renewable and recyclable building materials with a renewable content of at least 85%, characterised in that it comprises:
(a) providing a carbonaceous solid with an O/C molar ratio of less than 0.2,
(b) adding to the solid a total amount of adhesive between 1% and 20% by weight of the total dry weight of the carbonaceous solid;
(c) homogenising the mixture resulting from the previous step;
(d) pouring the mixture produced in the previous step into a mould; and
(e) applying a temperature between 100 and 180°C and a pressure of at least 5 MPa to the mould.

For the manufacture of building materials, hot pressing is an essential step. The pressure applied is a decisive factor in transforming the mixture of refined hydrochar and adhesive into a solid material, rather than simply obtaining a cohesionless powder. This step is crucial to ensure that the material has the necessary density and cohesion to meet the required quality standards.

In the present invention, the term "flame-retardant" refers to a material that has been designed or treated to resist or slow the spread of fire. The term "renewable" refers to a resource that can be replaced or regenerated at a rate equal to or greater than its consumption, these resources include those that naturally regenerate over time, such as, for example, wood. The term "recyclable" refers to the ability of a material or product to be processed and reused in the manufacture of new products at the end of its useful life.

In the present invention, when reference is made to "a renewable content" it refers to the proportion of a material or product that is composed of renewable resources. Likewise, formaldehyde is considered in this document as a renewable compound since it can be obtained from renewable methanol by selective oxidation or from syngas by selective reduction.

The term "O/C" refers to the oxygen to carbon molar ratio of the organic fraction of the carbonaceous material and it is calculated by two analyses, CHNS (carbon (C), hydrogen (H), nitrogen (N) and sulphur (S)) elemental analysis and the amount of ash. The starting point is a dry sample and the values always refer to this dry matter. The amount of ash, which forms the inorganic portion, is the fraction that remains after combustion at 815°C in air for 1 hour (according to standard UNE 32-004-84). The elemental analysis gives the percentage by weight of the carbon, hydrogen, nitrogen and sulphur elements. The percentage by weight of oxygen is obtained by subtracting the amount of ash and the amounts of the carbon, hydrogen, nitrogen and sulphur elements from 100. The weight ratio of the oxygen and carbon elements can be transformed into the molar ratio by taking into account the atomic masses of the two elements.

The term "renewable carbonaceous solid" refers to carbonaceous solids obtained from lignocellulosic biomass. Other types of biomass such as proteins, vegetable fats and oils, animal excrements (e.g., slurry) or waste water treatment residues, such as sewage sludge, are excluded. All these elements are not suitable for use in the methods of the present invention due to their different chemical nature. However, in limited quantities, they may be present in the initial biomass and be removed during the process or incorporated into the building materials without having an impact on the properties of the material.

Lignocellulosic biomass dry matter is composed of three biopolymers, cellulose, hemicellulose and lignin. Cellulose and hemicellulose are polysaccharides with formulas similar to (C₆H₁₀O₅)ₙ. This is the most regular cellulose formula. Hemicellulose may be further diversified by side chains with acetate or acid groups of glucuronic or galacturonic sugars. As can be seen, the O/C molar ratio in cellulose is 0.83. The side chains of hemicellulose are just as rich in oxygen as the main chain, and therefore, the O/C molar ratio in hemicellulose is similar to that of cellulose. Lignin is a biopolymer with a different structure. It is generally agreed that lignin is made up of certain substructures, which are described in Table 1.

**Table 1. Lignin composition (Lancefield, C. S., Wienk, H. L. J., Boelens, R., Weckhuysen, B. M., & Bruijnincx, P. C. A. (2018) Chemical Science, 9(30), 6348-6360).**

| **Substructure** | **Chemical Formula** | **O/C Molar Ratio** |
|---|---|---|
| β-aryl ether (β-O-4) | C₁₀H₁₂O₅ | 0.50 |
| phenylcoumaran (β-5) | C₁₆H₁₆O₅ | 0.31 |
| resinol (β- β) | C₁₈H₂₀O₆ | 0.30 |
| dibenzodioxocin | C₂₄H₂₂O₇ | 0.29 |

All components of lignocellulose, cellulose, hemicellulose and lignin have an O/C molar ratio higher than 0.2 and therefore a conversion or refinement step is required to achieve O/C molar ratios lower than 0.2; in the present invention this is achieved by transforming the lignocellulose biomass into hydrochar together with further thermal refinement.

In the present invention, the term "hydrochar" is used for the solid carbonaceous product when lignocellulosic material is processed under hydrothermal carbonisation conditions. Lignocellulosic matter includes many types of biomass such as, for example, wood, straw of any type of cereal, forest trimmings, fruit tree trimmings, garden trimmings, any herbaceous waste, agro-industrial plant waste, the organic fraction of municipal solid waste and any other material containing lignocellulose.

In the preferred embodiment of the first aspect of the invention, the renewable carbonaceous solid is obtained from lignocellulosic biomass by a process comprising:
(a) subjecting lignocellulosic biomass to a hydrothermal carbonisation process at a temperature between 180-300°C; and
(b) heating the solid obtained in the previous step in the absence of oxygen to a temperature between 400-700°C, preferably between 500-700°C.

Hydrothermal carbonisation can be carried out in a temperature range that varies according to the literature, without a strict definition. Different ranges are used, the widest being between 180°C and 300°C, and the most restricted between 210°C and 250°C. This process is carried out in the presence of water, which makes it possible to establish a ratio between the amount of water and the amount of dry matter used. Dry matter refers to the material that remains after complete drying of the biomass, for example, using a thermobalance. During the hydrothermal carbonisation process, the amount of water in the total mixture can vary between 66% and 85%, most commonly being between 75% and 80%. To calculate the amount of water present during the process, both the natural moisture of the biomass and any additional liquid that is added, either in liquid or vapour form, to the reactor during or prior to the reaction, for example, by using a premixture of biomass and water as starting material, are considered.

In a preferred embodiment of the first aspect of the invention, the carbonaceous solid of step (a) is obtained by hydrothermal carbonisation at a temperature between 200°C and 300°C from lignocellulosic biomass and subsequently the solid, hydrochar, obtained in this process is subjected to heat treatment at a temperature between 450°C and 700°C in the absence of oxygen. The material resulting from the processes described above has an O/C ratio of less than 0.2, which ensures that this carbonaceous solid offers high strength when transformed into a building material by the method of the invention.

In another particular embodiment of the first aspect of the invention, the carbonaceous solid of step (a) of the method of the invention is obtained from flame-retardant, renewable and recyclable building materials manufactured by the same method, wherein these building materials undergo a grinding step. The possibility of reusing materials manufactured by this process as carbonaceous starting material highlights the significant potential for circularity and reuse in the production of building materials derived from the method of the invention.

In another particular embodiment of the first aspect of the invention, the renewable carbonaceous solid used has a particle size of less than 6 mm, preferably being less than 1 mm and, even more preferably, with a particle size of less than 0.6 mm.

To achieve cohesion of the refined hydrochar, an adhesive must be used. In the present invention, a phenolic resin is preferably used as an adhesive, which can be synthesised in the presence of the refined hydrochar, or a commercial adhesive based on phenolic compounds can be used. The advantage of the latter option is that the commercial adhesive can be mixed directly with the refined hydrochar, eliminating the need for the synthesis step in the presence of the material. Furthermore, renewable adhesives made from natural macromolecules, such as tannins or lignin, can be chosen, which makes it possible to avoid or minimise the use of fossil-based compounds. The total amount of adhesive used in step (b) varies between 1% and 20% by weight of the total dry weight of the carbonaceous solid. Preferably, this amount is between 5% and 15% of the total dry weight of the carbonaceous solid. Even more preferably, the amount of adhesive is between 8% and 12% of the total dry weight of the carbonaceous solid.

In another particular embodiment of the first aspect of the invention, the adhesive of step (b) is synthesised in the presence of the renewable solid. In another particular embodiment of the first aspect of the invention, the adhesive of step (b) is synthesised in the presence of the renewable solid from a phenolic compound and an aldehyde, preferably from phenol and formaldehyde. In another particular embodiment of the first aspect of the invention, the adhesive mentioned in step (b) is synthesised in the presence of the renewable solid using a solvent and an inorganic base, preferably using ethanol as a solvent and sodium hydroxide as an inorganic base.

In another particular embodiment of the first aspect of the invention, the adhesive mentioned in step (b) is synthesised, in the presence or absence of the renewable carbonaceous solid, from one or more renewable sources that are selected from the group of tannins, lignins, bio-oils produced during the pyrolysis of lignocellulosic biomass or hydrochar, and renewable phenolic compounds which are selected from the group of phenol, ortho-cresol, meta-cresol, para-cresol, catechol, resorcinol, hydroquinone, monoalkylphenols, dialkylphenols, trialkylphenols, tetraalkylphenols, monoalkyldihydroxybenzene, dialkyldihydroxybenzene, trialkyldihydroxybenzene, salicylic acid, alkyl salicylate, vanillin, eugenol, thymol, *para-*hydroxybenzoic acid, derivatives thereof containing additional substituents selected from alkyl containing 1 to 12 carbon atoms, alkoxy, hydroxy, carboxy, amino and nitro, and mixtures of the foregoing compounds. Preferably, the adhesive mentioned in step (b) is synthesised, in the presence or absence of the renewable carbonaceous solid, from one or more renewable sources that are selected from the group of aliphatic aldehydes of 1 to 8 carbon atoms, aromatic or heteroaromatic aldehydes, glyoxylic acid and glyoxal.

Alternatively, the adhesive used in step (b) is a commercial adhesive of the phenolic resin type.

In another particular embodiment of the first aspect of the invention, the temperature range used in step (e) is between 100°C and 160°C, preferably between 120°C and 145°C, and the minimum applied pressure is at least 5 MPa, preferably at least 8 MPa and even more preferably at least 10 MPa.

In an alternative embodiment of the first aspect, the building materials are manufactured by 3D printing using 3D printing devices capable of applying heat and pressure simultaneously.

In its second aspect, the invention relates to a building material obtained by a method according to the first process of the invention, preferably the building material is a building board.

In its third aspect, the invention relates to a flame-retardant, renewable and recyclable building material comprising a carbonaceous solid with an O/C molar ratio of less than 0.2 and an adhesive.

In a preferred embodiment of the third aspect of the invention, the adhesive present in the building material is a phenolic resin. Preferably, the adhesive is synthesised from one or more renewable sources that are selected from the group of aliphatic aldehydes of 1-8 carbon atoms, aromatic or heteroaromatic aldehydes, glyoxylic acid and glyoxal. Preferably, the adhesive is synthesised from renewable phenolic compounds that are selected from the group of phenol, *ortho*-cresol, *meta*-cresol, *para*-cresol, catechol, resorcinol, hydroquinone, monoalkylphenols, dialkylphenols, trialkylphenols, tetraalkylphenols, monoalkyldihydroxybenzene, dialkyldihydroxybenzene, trialkyldihydroxybenzene, salicylic acid, alkyl salicylate, vanillin, eugenol, thymol, *para*-hydroxybenzoic acid, derivatives thereof containing additional substituents selected from alkyl containing 1 to 12 carbon atoms, alkoxy, hydroxy, carboxy, amino and nitro, and mixtures of the foregoing compounds.

In a preferred embodiment of the third aspect of the invention, the building material is a board with an internal cohesion greater than 0.10 N/mm² and a screw withdrawal resistance greater than 300 N. The boards are building materials that must comply with certain specific characteristics detailed in the relevant standards. For example, standard UNE-EN 320, titled "Particleboards and fibreboards - Determination of resistance to axial withdrawal of screws", and standard UNE-EN 319, titled "Particleboards and fibreboards - Determination of tensile strength perpendicular to the plane of the board", establish methods for assessing the quality and strength of these materials.

Throughout the description and the claims, the word "comprises" and its variations are not intended to exclude other technical features, additives, components or steps. In this document, the word "comprises" is considered to encompass the concept of "consists". The objects, advantages and additional features of the invention will become apparent to those skilled in the art upon examination of the description, or they can be learned from the examples of the invention. The following examples and drawings are provided for illustrative purposes and are in no way intended to be limiting of the present invention. Additionally, the invention covers all possible combinations of the particular and preferred embodiments of the present document.

### EXAMPLES

### Example 1. Hydrochar production in a commercial plant from different types of biomass

Next, various methods for preparing hydrochar by using different types of lignocellulosic biomass, such as agricultural waste and the organic fraction of municipal waste, are presented.

Hydrochar (HPod) was prepared from garden trimmings in a pilot plant as described in the literature (Catalysis Today), 2015, 257, 154-159) and it had similar properties as reported. The hydrochar was obtained in the form of pellets having a diameter of 6 mm.

Hydrochar (HNar) was prepared from orange peel in a pilot plant as described in the literature (Green Chemistry, 2016, 18, 1051-1060) and it had similar properties as reported. The hydrochar was obtained in the form of pellets having a diameter of 6 mm.

Hydrochar (HFOr) was prepared from the organic fraction of municipal solid waste in a pilot plant as described in the literature (Resources, Conservation & Recycling, 2019, 147, 111-118) and it had similar properties as reported. The hydrochar was obtained in the form of pellets having a diameter of 6 mm. Hydrochar (HArr) was prepared in the same way from rice straw in the commercial plant. To do this, three tonnes of rice straw were used and one tonne of hydrochar was obtained. The material had an ash content of 18% and a carbon content of 60% (on a dry, ash-free basis). The hydrochar was obtained in the form of pellets having a diameter of 6 mm. Likewise, hydrochar (HAIP) was prepared in the same way from a mixture of cotton with garden trimmings in the commercial plant at a ratio of approximately 50:50. The material had an ash content of 13% and a carbon content of 63% (on a dry, ash-free basis). The hydrochar was obtained in the form of pellets having a diameter of 6 mm.

Lastly, hydrochar (HAIg) was prepared from cotton. Two kilograms of cotton were introduced in a 30 L volume autoclave and heated for 4 hours at 215°C with 27 kg of hot water vapour. The HAIg material had an ash content of less than 1%.

### Example 2. Heat treatment of hydrochar to obtain carbonaceous solid or refined hydrochar

The different hydrochars obtained in the previous example were subjected to a refining process in the absence of oxygen.

During the heat treatment (HT) the hydrochar was placed on a porous plate in a vertical quartz tube. The tube was introduced in a furnace that covered the area occupied by the hydrochar well. A downward flow of nitrogen was applied and the reactor was heated with a ramp of three Kelvin per minute to the desired temperature (500 or 600°C). This temperature was maintained for one hour and the heating was turned off. It was allowed to cool to room temperature, maintaining the flow of nitrogen.

Table 2 shows the O/C molar ratios of the carbonaceous materials obtained, as well as their ash content.

**Table 2. O/C molar ratios of refined hydrochars produced from different types of hydrochars (see example 1), treated at different temperatures in the absence of oxygen (thermal or pyrolytic treatment).**

| **Raw Material** | **Product** | **HT Temp. [°C]** | **O/C [mol/mol]** | **Ash content [% by weight]** |
|---|---|---|---|---|
| HPod | HPodR | 600 | 0.12 | 31 |
| HNar | HNarR | 600 | 0.08 | 14 |
| HFOr | HFOrR | 600 | 0.08 | 34 |
| HArr | HArrR | 600 | 0.14 | 31 |
| HAIP | HAIPR | 600 | 0.08 | 25 |
| HAIP | HAIPR | 500 | 0.13 | 23 |
| HAIg | HAlgR | 600 | 0.06 | 3 |

### Example 3. Refined hydrochar pellet milling and particle size distribution

Before use in the process for preparing the building material, the pellets obtained in the pilot plant autoclave and thermally post-treated, which characteristics are described in Table 2 of example 2, must be ground to a suitable particle size.

To do this, the different refined hydrochars were ground in a Fritsch Pulverisette 11 mill and the following particle distribution was obtained: 55% < 0.2 mm; 40% 0.2 mm - 0.6 mm; 5% > 0.6 mm.

The only exception to grinding was HAlg hydrochar, as it was prepared in a 30 L autoclave, obtaining particulate matter with a particle size suitable for curing the building material (step e of claim 1), after refining by heat treatment.

### Example 4. Preparation of the adhesive in the presence of the refined hydrochar.

This example embodies a particular embodiment of the invention, wherein the adhesive was prepared *in situ* in the presence of the refined hydrochar.

To do this, 200 g of ground refined hydrochar were added to a round-bottomed flask, together with 20 g of phenol, 250 ml of ethanol and 12 g of NaOH. The mixture was heated to 80°C under reflux with constant stirring over a heating block, while 150 ml of formaldehyde in water (37% by weight), stabilised with methanol, was added dropwise. After two hours of reaction, the mixture was allowed to cool and the ethanol and residual water were removed from the formaldehyde by distillation in a rotary evaporator. The result was a viscous mass, ready for further processing.

### Example 5. Manufacture of the building material by applying temperature and pressure.

For the manufacture of the building material from the mixture prepared in the previous example, the following methodology was followed:
A 50 mm x 47 mm aluminium mould was filled using the mixture of carbonaceous material with the adhesive, prepared from different refined and milled hydrochars as described in example 3. The mould was placed in a press with the plates pre-heated to 130°C. A minimum pressure of 10 MPa was applied to the surface of the mould. The plates were kept in a fixed position for 15 minutes. Subsequently, the mould was removed, allowed to cool and the part was unmoulded, obtaining a board.

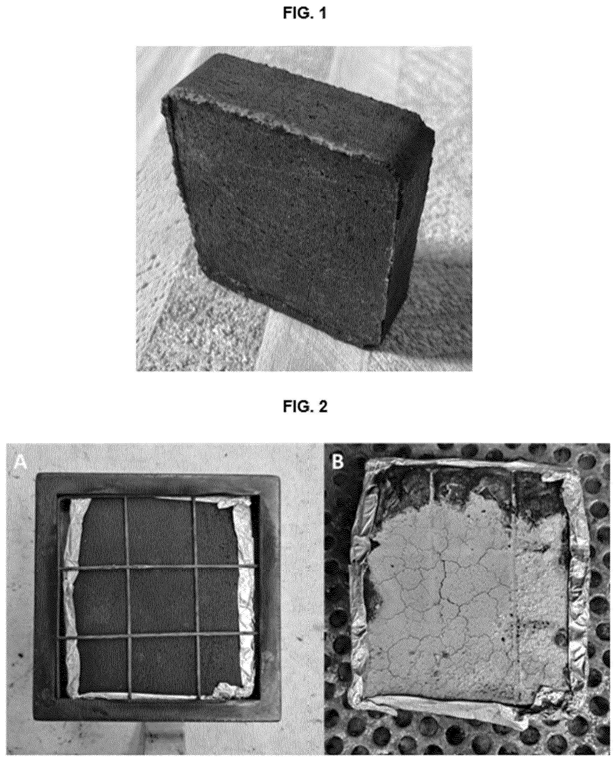

The resulting material, shown in Figure 1, maintained its cohesion, resulting in a board with a robust consistency.

### Example 6. Manufacture of comparative "board" without the application of pressure.

As a comparative example, the same manufacturing process described in example 5 was used, the only difference being that no pressure was applied during curing.

For this experiment, a 50 mm x 47 mm aluminium mould was filled (Figure 1) using the mixture of carbonaceous material with the adhesive, prepared from *HPodR* following the methodology of example 4. The mould was placed in a press with the plates pre-heated to 130°C, but without applying pressure. The plates were kept in a fixed position for 15 minutes. Subsequently, the mould was removed and allowed to cool.

The resulting material, after being subjected to 130°C for 15 minutes, failed to maintain cohesion, presenting a powdery appearance.

### Example 7. Properties of boards produced.

Following the method described in example 5, seven boards were manufactured, each corresponding to the seven hydrochars mentioned in example 1. The properties of the resulting boards are detailed in Table 3. Due to limitations in the production of the different refined hydrochars, it was not possible to carry out all the density, perpendicular tensile strength and screw withdrawal tests for each of the manufactured boards.

**Table 3. Properties of the boards produced according to the method described in example 5.**

| | | **Core tensile strength** | **Screw withdrawal** |
|---|---|---|---|
| | **Density** | **UNE-EN 319** | **UNE-EN 320** |
| **Refined hydrochar** | **[kg/m³]** | **[N/mm²]** | **[N]** |
| HPodR | 1340 | 2.23 | 1500 |
| HNarR | 1203 | 1.58 | 2030 |
| HFOrR | 1300 | 1.55 | 2590 |
| HArrR | 1130 | 1.13 | - |
| HAIPR | - | 0.788 | - |
| HAIPR (500 °C) | 1130 | 1.20 | - |
| HAIgR | - | 0.819 | 700 |

### Example 8. Recycling of the boards and reintegration into the building material

The boards produced, regardless of the source of the hydrochar, were shredded and ground in a Fritsch Pulverisette 11 mill, in a similar way as the pelleted hydrochar was treated in example 3. The particle distribution obtained was as follows: 35% < 0.2 mm; 55% between 0.2 mm and 0.6 mm; and 10% > 0.6 mm. The resulting material was called TabRec.

Following the method detailed in example 5, two boards were obtained which properties are described in Table 4. In the first case, instead of using refined hydrochar, the powder obtained from the boards was used, as detailed above. In the second case, a mixture consisting of 50% of the powder prepared in example 8 and 50% of refined and ground hydrochar HPodR was used.

**Table 4. Properties of the boards produced according to the method described in example 5**

| **Refined hydrochar** | **Density [kg/m³]** | **Core tensile strength UNE-EN 319 [N/mm²]** | **Screw withdrawal UNE-EN 320 [N]** |
|---|---|---|---|
| TabRec | - | > 4.353 | 855 |
| TabRec/HPodR (50: 50) | - | 3.177 | --- |

The boards made from carbonaceous solid derived from recycled boards exhibited comparable properties to the boards in example 7, showing a remarkable potential for circularity and the reuse of materials.

### Example 10. Fire performance test with the HPodR board

The flame-retardant properties of the boards of the invention, in particular of the board in example 5 (HPodR), were assessed following the methodology set out in the international standard ISO 5660.

To carry out the tests, an irradiation of 50 kW/m² was applied on the surface of the specimen, with a distance of 25 mm between the surface of the specimen and the lower edge of the radiant cone. The board was tested using a retaining support with a grid, as shown in Figure 2. The specimen was wrapped in a layer of aluminium and placed directly on a layer of refractory fibre, with a test surface of 0.00884 m².

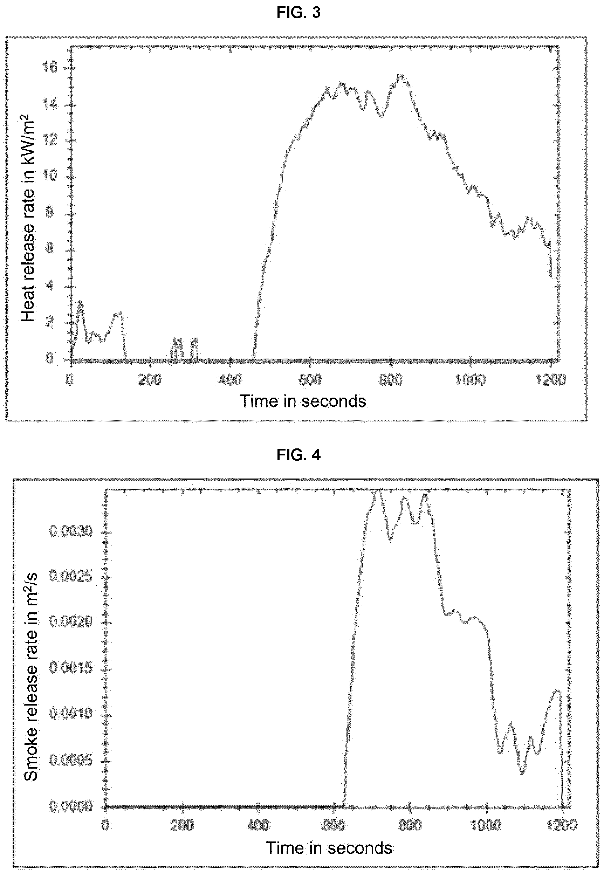

Figures 3 and 4 illustrate the heat release rate and the smoke release rate, respectively. Both graphs show remarkable resistance to applied heat and delayed partial combustion under the test conditions. Ignition occurred after 450 seconds.

As can be observed in Figures 3 and 4, the board obtained from the process of the invention exhibited excellent flame-retardant properties. The heat release rate per unit area (HRR) was 11.03 kW/m², with a maximum heat release rate (MAHRR) of 7.00 kW/m² and total heat release per unit area (THR) of 8.2 MJ/m². The total smoke release per unit area (S_{A}) of the sample was 131 m²/m².

## Claims

1. A method for obtaining flame-retardant, renewable and recyclable building materials with a renewable content of at least 85%, **characterised in that** it comprises the following steps:
(a) providing a carbonaceous solid with an O/C molar ratio of less than 0.2;
(b) adding to the solid a total amount of adhesive between 1% and 20%,
preferably between 5% and 15%, and more preferably between 8 and 12%, by weight of the total dry weight of the carbonaceous solid;
(c) homogenising the mixture resulting from the previous step;
(d) pouring the mixture produced in the previous step into a mould; and
(e) applying a temperature between 100 and 180°C and a pressure of at least 5 MPa to the mould, preferably at least 8 MPa, and more preferably at least 10 MPa.

2. The method according to the preceding claim, **characterised in that** said carbonaceous solid is obtained from lignocellulosic biomass by a process comprising:
(i) subjecting lignocellulosic biomass to a hydrothermal carbonisation process at a temperature between 200-300°C; and
(ii) heating the solid obtained in the previous step to a temperature between 450-700°C, in the absence of oxygen.

3. The method according to claim 1, **characterised in that** said carbonaceous solid is obtained by milling building materials produced by the method according to claim 1.

4. The method according to any of the preceding claims, **characterised in that** said carbonaceous solid is used with a particle size of less than 6 mm, preferably the particle size is less than 1 mm, and more preferably the particle size is less than 0.6 mm.

5. The method according to any of the preceding claims, **characterised in that** the adhesive of step (b) is synthesised in the presence of the renewable solid from a phenolic compound and an aldehyde, preferably from phenol and formaldehyde.

6. The method according to the preceding claim, **characterised in that** the adhesive mentioned in step (b) is synthesised in the presence of the renewable solid using a solvent and an inorganic base, preferably using ethanol as a solvent and sodium hydroxide as an inorganic base.

7. The method according to any of claims 1 to 4, **characterised in that** the adhesive mentioned in step (b) is synthesised, in the presence or absence of the renewable carbonaceous solid, from one or more renewable sources that are selected from the group of tannins, lignins, bio-oils produced during the pyrolysis of lignocellulosic biomass or hydrochar, and renewable phenolic compounds which are selected from the group of phenol, *ortho*-cresol, *meta*-cresol, *para*-cresol, catechol, resorcinol, hydroquinone, monoalkylphenols, dialkylphenols, trialkylphenols, tetraalkylphenols, monoalkyldihydroxybenzene, dialkyldihydroxybenzene, trialkyldihydroxybenzene, salicylic acid, alkyl salicylate, vanillin, eugenol, thymol, *para*-hydroxybenzoic acid, derivatives thereof containing additional substituents selected from alkyl containing 1 to 12 carbon atoms, alkoxy, hydroxy, carboxy, amino and nitro, and mixtures of the foregoing compounds.

8. The method according to any of claims 1 to 4, **characterised in that** the adhesive mentioned in step (b) is synthesised, in the presence or absence of the renewable carbonaceous solid, from one or more renewable sources that are selected from the group of aliphatic aldehydes of 1 to 8 carbon atoms, aromatic or heteroaromatic aldehydes, glyoxylic acid and glyoxal.

9. The method according to any of claims 1 to 4, **characterised in that** the adhesive mentioned in step (b) is a commercial adhesive, preferably of the phenolic resin type.

10. The method according to any of the preceding claims, **characterised in that** step (e) is carried out in a temperature range from 100 to 160°C, preferably from 120 to 145 °C.

11. The method according to any of the preceding claims, **characterised in that** the building material is a board with an internal cohesion of at least 0.1 N/mm², in accordance with the Spanish standard UNE-EN 319 for particleboards and fibreboards.

12. The method according to any of the preceding claims, **characterised in that** the building material is a board and has a screw withdrawal resistance greater than 300 N, preferably greater than 700 N, in accordance with the Spanish standard UNE-EN 320 for particleboards and fibreboards.

13. The method according to any of the preceding claims, **characterised in that** the building material is manufactured by 3D printing.

14. A building material obtained by a method according to any of claims 1 to 13, preferably the building material is a building board.

15. A flame-retardant, renewable and recyclable building material comprising a carbonaceous solid with an O/C molar ratio of less than 0.2 and an adhesive.

16. The building material according to the preceding claim, wherein the adhesive is a phenolic resin.

17. The building material according to the preceding claim, wherein the adhesive is synthesised from one or more renewable sources that are selected from the group of aliphatic aldehydes of 1-8 carbon atoms, aromatic or heteroaromatic aldehydes, glyoxylic acid and glyoxal.

18. The building material according to claim 16, wherein the adhesive is synthesised from renewable phenolic compounds that are selected from the group of phenol, *ortho*-cresol, *meta-*cresol, *para*-cresol, catechol, resorcinol, hydroquinone, monoalkylphenols, dialkylphenols, trialkylphenols, tetraalkylphenols, monoalkyldihydroxybenzene, dialkyldihydroxybenzene, trialkyldihydroxybenzene, salicylic acid, alkyl salicylate, vanillin, eugenol, thymol, *para-*hydroxybenzoic acid, derivatives thereof containing additional substituents selected from alkyl containing 1 to 12 carbon atoms, alkoxy, hydroxy, carboxy, amino and nitro, and mixtures of the foregoing compounds.

19. The building material according to any of the preceding claims, wherein the building material is a board with an internal cohesion greater than 0.10 N/mm² and a screw withdrawal resistance greater than 300 N.
